# EUROPÄISCHE PATENTSCHRIFT

(11) **EP 0 995 041 B1**
(45) Veröffentlichungstag und Bekanntmachung des Hinweises auf die Patenterteilung: **14.04.2004**
(21) Anmeldenummer: 98940167.4
(22) Anmeldetag: 07.07.1998
(51) Int. Cl.: F15B 13/044, F16K 27/04

(54) **HYDRAULISCHES EINBAUVENTIL, INSBESONDERE FÜR EINE HYDRAULISCHE NOCKENWELLENVERSTELLUNG AN EINEM KRAFTFAHRZEUGMOTOR**
BUILT-IN HYDRAULIC VALVE, SPECIALLY FOR A HYDRAULIC CAMSHAFT DISPLACEMENT IN A MOTOR VEHICLE ENGINE
SOUPAPE INCORPOREE HYDRAULIQUE, EN PARTICULIER POUR LE DEPLACEMENT HYDRAULIQUE DE L'ARBRE A CAMES SUR UN MOTEUR DE VEHICULE AUTOMOBILE

(30) Priorität: 12.07.1997 DE 19729935
(43) Veröffentlichungstag der Anmeldung: 26.04.2000
(73) Patentinhaber: Hydraulik-Ring GmbH, 09212 Limbach-Oberfrohna (DE)
(72) Erfinder: CORNEA, Marius, D-97816 Lohr (DE); LIPPERT, Lorenz, D-97737 Gemünden (DE)
(74) Vertreter: Jackisch-Kohl, Anna-Katharina
(86) Internationale Anmeldenummer: PCT/EP1998/004210
(87) Internationale Veröffentlichungsnummer: WO 1999/002866

(56) Entgegenhaltungen:
- EP-A- 0 432 873
- EP-A- 0 676 548
- EP-A- 0 766 029
- DE-A- 3 340 001
- DE-A- 4 228 045
- DE-A- 19 537 656

## Beschreibung

Die Erfindung betrifft ein hydraulisches Einbauventil, insbesondere für eine hydraulische Nockenwellenverstellung an einem Kraftfahrzeugmotor, nach dem Oberbegriff des Anspruches 1.

Bei diesem bekannten Einbauventil (DE-A-42 28 045) sind das Magnetgehäuse und das Ventilgehäuse einstückig miteinander ausgebildet. Das als radial abstehender Flansch ausgebildete Befestigungsauge ist einstückig mit dem Magnetgehäuse ausgebildet. Dadurch ist der Zusammenbau des Einbauventiles umständlich und schwierig. Das Magnetgehäuse und das Ventilgehäuse können auch getrennte Bauteile sein, die miteinander verbunden werden. Das Ventilgehäuse kann gegenüber dem Magnetgehäuse verdreht werden, wodurch sich die Lage der Radialbohrungen im Ventilglied relativ zum Magnetgehäuse ändert. Die Montage des Einbauventiles ist dadurch aufwendig und schwierig, da die Radialbohrungen des Ventilgliedes umständlich zu den entsprechenden Bohrungen im Funktionsteil ausgerichtet werden müssen, in das das Einbauventil eingebaut wird.

Bei einem anderen bekannten hydraulischen Einbauventil (DE 33 40 001 A1) wird die Einbaupatrone letztendlich in eine Einbaubohrung eines Hauptgehäuses eingesetzt, das Außenanschlüsse aufweist, an die externe Druckmittelleitungen angeschlossen werden können und von denen aus Kanäle in die Einbaubohrung führen. Über radiale Durchlässe in der Einbaupatrone sind diese Kanäle mit der Axialbohrung der Einbaupatrone verbunden. Bei dem aus der DE 33 40 001 A1 bekannten hydraulischen Ventil besteht ein radialer Durchlaß aus einer zur Axialbohrung hin offenen Ringnut und einer von der Ringnut ausgehenden und bis zum Außenumfang der Einbaupatrone reichenden Radialbohrung. Die verschiedenen Radialbohrungen der Einbaupatrone sind entsprechend den in die Einbaubohrung mündenden Kanälen des Hauptgehäuses anzuordnen. Bei der Montage muß die Einbaupatrone in eine solche Winkellage bezüglich des Hauptgehäuses gebracht werden, daß die Radialbohrungen zu den Kanälen des Hauptgehäuses ausgerichtet sind.

Bei dem hydraulischen Ventil nach der DE 33 40 001 A1 besitzt die Einbaupatrone eine Außenschulter, auf die eine Befestigungsplatte mit einem Befestigungsauge aufgelegt ist. Auf ein sich oberhalb der Platte befindliches Außengewinde der Einbaupatrone ist ein Magnetgehäuse aufgeschraubt. Die Befestigungsplatte befindet sich also zwischen der Außenschulter der Einbaupatrone und dem Magnetgehäuse. Es ist demnach möglich, die Befestigungsplatte in einer zu den Radialbohrungen der Einbaupatrone winkelgerechten Position zwischen der Außenschulter der Einbaupatrone und dem Magnetgehäuse axial festzuklemmen, so daß beim Einsetzen der Einbaupatrone in das Hauptgehäuse und der Ausrichtung des Befestigungsauges zu einer Gewindebohrung des Hauptgehäuses die Radialbohrungen in die richtige Position zu den Kanälen des Hauptgehäuses gelangen. Nun ist es allerdings so, daß dem Zusammenbau des Einbauventils nicht immer unmittelbar die Montage im Hauptgehäuse folgt. In der Zwischenzeit kann jemand das Magnetgehäuse losgeschraubt und wieder befestigt haben, so daß die Ausrichtung von Befestigungsauge und Radialbohrungen nicht mehr gewährleistet ist. Ebenso können Manipulationen auch noch nach der Montage am Hauptgehäuse vorgenommen werden, was ebenfalls die Ausrichtung der Radialbohrungen zunichte macht.

Der Erfindung liegt die Aufgabe zugrunde, das gattungsgemäße hydraulische Einbauventil so auszubilden, daß die einmal vorgenommene Ausrichtung des Befestigungsauges zu den Radialbohrungen der Einbaupatrone durch nachträgliche Manipulationen mit hoher Sicherheit nicht mehr zunichte gemacht wird.

Diese Aufgabe wird beim gattungsgemäßen hydraulischen Einbauventil erfindungsgemäß mit den kennzeichnenden Merkmalen des Anspruches 1 gelöst.

Beim erfindungsgemäßen Einbauventil kann die relative Lage des Befestigungsauges zur Einbaupatrone bzw. zum Stecker nicht ohne Werkzeug oder mit relativ einfachen Werkzeugen, wie Schraubenschlüssel oder Schraubendreher, verändert werden. Eine versehentliche Veränderung dieser relativen Lage zueinander ist deshalb weitgehend ausgeschlossen. Wird das Einbauventil in das Hauptgehäuse eingebaut, wird durch die Lage des Befestigungsauges die Relativlage der Radialbohrungen der Einbaupatrone in bezug auf die im Hauptgehäuse vorhandenen Bohrungen gewährleistet. Vorteilhafte Ausgestaltungen eines erfindungsgemäßen hydraulischen Einbauventils kann man den Unteransprüchen entnehmen.

Besonders bevorzugt ist dabei eine Ausbildung gemäß Anspruch 3, wonach das Befestigungsauge einstückig mit einem Bauteil des Elektromagneten ausgebildet ist. Üblicherweise bestehen zwischen den fest zueinander angeordneten Bauteilen eines Einbauventils mit Elektromagnet, wie Einbaupatrone, Magnetgehäuse, Polkernen des Elektromagneten, Steckerteil des Elektromagneten und Wicklung feste Verbindungen, zu deren Lösen einfache Werkzeuge nicht ausreichen, so daß durch die Einstückigkeit des Befestigungsauges mit einem Bauteil des Elektromagneten nach einem einmaligen Ausrichten des Befestigungsauges zur Einbaupatrone mit hoher Sicherheit die relative Position zueinander beibehalten wird. Vorteilhafterweise ist gemäß Anspruch 4 das Befestigungsauge einstückig mit dem Magnetgehäuse ausgebildet.

Gemäß Anspruch 6 ist das Magnetgehäuse in einem der Einbaupatrone benachbarten Bereich mit einem Polkern des Elektromagneten durch eine in einer Ringnut des Polkerns eingedrückte Sicke verbunden. Damit auch im Bereich des Befestigungsauges eine Sicke bzw. die Sicke vorhanden sein kann, besitzt diese einen größeren Abstand von der der Einbaupatrone zugewandten Stirnseite des Magnetgehäuses als das Befestigungsauge. Zwischen der Sicke und der Stirnseite des Magnetgehäuses kann also das Befestigungsauge vom Magnetgehäuse abstehen.

Sind der patronenseitige Polkern des Elektromagneten und die Einbaupatrone getrennte Teile, so sind diese vorteilhafterweise durch eine Verbördelung aneinander befestigt. Eine solche Verbördelung ist sehr einfach und kann trotzdem so fest gestaltet werden, daß die ausgerichtete relative Lage zwischen der Einbaupatrone und dem sich an einem Teil des Elektromagneten befindenden Befestigungsauge beibehalten wird.

Ein Ausführungsbeispiel eines erfindungsgemäßen hydraulischen Einbauventils ist in den Zeichnungen dargestellt. Anhand der Figuren dieser Zeichnungen wird die Erfindung nun näher erläutert.

Es zeigen
- Figur 1: das Ausführungsbeispiel teils in Ansicht, teils in einem Längsschnitt und

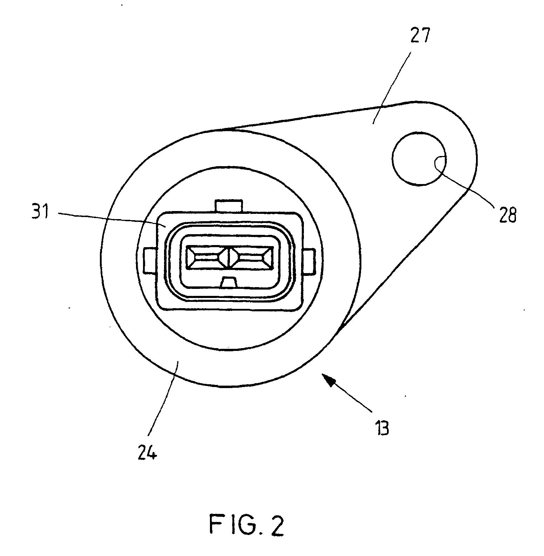

- Figur 2: das Ausführungsbeispiel in Richtung des Pfeiles A aus Figur 1.

Die Einbaupatrone 10 des gezeigten hydraulischen Ventils taucht mit ihrem einen Ende in einen kreiszylindrischen Aufnahmeraum 11 eines vorderen Polkerns 12 eines Elektromagneten 13 ein. Sie besitzt eine durchgehende Axialbohrung 14, in der ein Steuerkolben 15 axial verschiebbar aufgenommen ist. Von der dem Elektromagneten 13 abgewandten Stirnseite 19 aus ist in die Einbaupatrone 10 eine Scheibe 16 mit einem zentralen Durchlaß 17 eingepreßt, an der sich eine den Steuerkolben 15 in Richtung auf den Polkern 12 hin belastende Schraubendruckfeder 18 abstützt. Den Durchlaß 17 kann man als einen axialen Anschluß des gezeigten Ventils betrachten.

Außer dieser axialen Anschlußöffnung besitzt die Einbaupatrone 10 noch drei radiale Anschlußöffnungen in Form von drei Radialbohrungen 22. Jede Radialbohrung 22 hat gegenüber den anderen Radialbohrungen einen anderen Abstand von der dem Elektromagneten 13 abgewandten Stirnseite 19 der Einbaupatrone 10. Außerdem sind die Radialbohrungen 22 winkelmäßig gegeneinander versetzt. Insgesamt ist ihre Anordnung so getroffen, daß sie mit drei Kanälen in Überdeckung gebracht werden können, die durch ein nur teilweise dargestelltes Hauptgehäuse 9 hindurchgehen und in eine Einbaubohrung 8 des Hauptgehäuses münden, in die die Einbaupatrone 10 eingesetzt wird. Die, in axialer Richtung gesehen, mittlere der drei Radialbohrungen 22 erstreckt sich über die gesamte Wandstärke der Einbaupatrone. Die beiden äußeren Radialbohrungen 22 gehen vom Außenumfang der Einbaupatrone aus und münden innen jeweils in eine umlaufende Ausdrehung 23.

Die axiale Anschlußöffnung 17 ist dafür vorgesehen, im Betrieb mit einem Tank oder allgemein mit einem Niederdruckbereich verbunden zu werden. Die mittlere Radialbohrung ist mit einer Druckmittelquelle verbunden, während die beiden äußeren Radialbohrungen 22 einem hydraulischen Verbraucher zugeordnet sind.

Der Elektromagnet 13 besitzt ein aus einem Stahlblech tiefgezogenes topfartiges Gehäuse 24, das den Polkern 12 axial übergreift. Das Magnetgehäuse 24 ist umlaufend in eine Ringnut 25 des Polkerns 12 eingedrückt, so daß an ihm eine umlaufende Sicke 26 entstanden ist. Auf diese Weise ist in axialer Richtung eine formschlüssige Verbindung zwischen dem Magnetgehäuse 24 und dem Polkern 12 geschaffen. Auch in peripheraler Richtung ist die Verbindung so fest, daß Polkern 12 und Magnetgehäuse 24 nicht gegeneinander verdreht werden können.

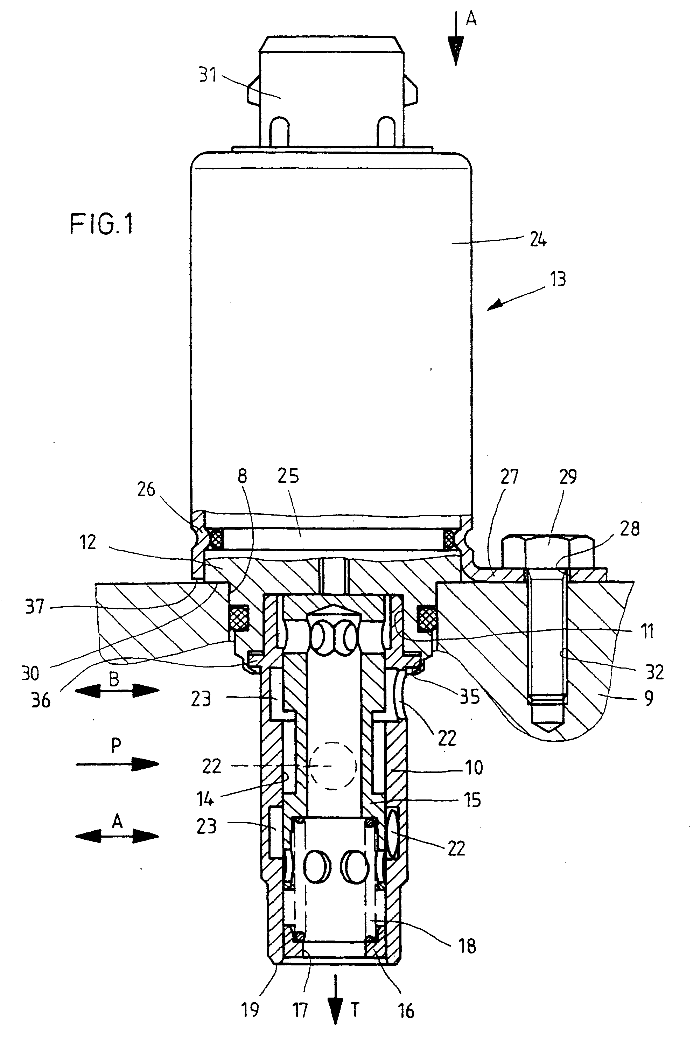

Einstückig mit dem als Tiefziehteil gefertigten topfförmigen Magnetgehäuse 24 ist ein Befestigungsauge 27 ausgebildet, das in einer radialen Ebene liegt und unmittelbar an der der Einbaupatrone 10 zugewandten Stirnseite 37 des Magnetgehäuses 24 von diesem absteht. Die Sicke 26 befindet sich also in einem größeren Abstand von der besagten Stirnseite als das Befestigungsauge 27 und kann deshalb rund um das Magnetgehäuse 24 herumlaufen. Das Befestigungsauge 27 besitzt ein Loch 28, durch das hindurch eine Maschinenschraube 29 in eine Gewindebohrung 32 des Hauptgehäuses 9 eingeschraubt werden kann. Aus Figur 1 ist ersichtlich, daß das hydraulische Ventil mit einer Außenschulter 30 am Polkern 12 am Hauptgehäuse 9 anliegt. Damit dies sicher so ist, sind die Stirnseite des Magnetgehäuses 24 sowie die dem Hauptgehäuse 9 zugewandte Anlagefläche des Befestigungsauges 27 in dessen unverspanntem Zustand gegenüber der Schulter 30 leicht zurückgesetzt. Beim Anziehen der Schraube 29 wird das Befestigungsauge 27 etwas abgebogen und gegen das Hauptgehäuse 9 gedrückt. Die Außenschulter 30 liegt dann sicher am Hauptgehäuse 9 an.

Beim Zusammenbau des Magneten wird darauf geachtet, daß der an der der Patrone 10 abgewandten Seite vorhandene elektrische Stecker 31 und das Befestigungsauge 27 eine vorbestimmte relative Lage zueinander einnehmen.

Der kreiszylindrische Aufnahmeraum 11 im Polkern 12, in den die Einbaupatrone 10 eingesteckt ist, ist zur Stirnseite des Polkerns 12 hin durch eine Ausdrehung 35 erweitert. In dieser befindet sich ein um die Einbaupatrone 10 herumlaufender Bund 36, wobei die axiale Erstreckung der Ausdrehung 35 größer ist als die Dicke des Bundes 36 und Material des Polkerns 12 zunächst über den Bund 36 axial vorsteht. Zur Befestigung von Elektromagnet 13 und Einbaupatrone 10 aneinander wird das überstehende Material des Polkerns 12 über den Bund 36 gebördelt. Beim Zusammenbau wird darauf geachtet, daß die Einbaupatrone 10 und das Befestigungsauge 27 eine solche relative Lage zueinander einnehmen, wie sie auch die Gewindebohrung 32 und die Mündungen der nicht näher dargestellten Druckmittelkanäle des Hauptgehäuses 9 an der Aufnahmebohrung 8 für die Einbaupatrone 10 zueinander haben. Damit ist sichergestellt, daß bei der Montage des hydraulischen Ventils am Hauptgehäuse 9, während der das Loch 28 im Befestigungsauge 27 in Flucht mit der Gewindebohrung 32 gebracht wird, die Radialbohrungen 22 die entsprechenden Druckmittelkanäle im Hauptgehäuse 9 wenigstens annähernd ganz überdecken. Durch die festen Verbindungen zwischen dem Magnetgehäuse 24 und dem Polkern 12 einerseits sowie zwischen dem Polkern 12 und der Einbaupatrone 10 andererseits ist während der gesamten Handhabung des hydraulischen Ventils die feste Zuordnung zwischen dem Befestigungsauge 27 und der Einbaupatrone 10 gewährleistet.

## Patentansprüche

1. Hydraulisches Einbauventil, insbesondere für eine hydraulische Nockenwellenverstellung an einem Kraftfahrzeugmotor, mit einer Einbaupatrone (10), die eine Axialbohrung (14), in der ein Ventilglied (15) axial bewegbar ist, und wenigstens eine Radialbohrung (22) aufweist, die vom Außenumfang der Einbaupatrone (10) ausgeht und dem Zufluß in oder dem Abfluß von Druckmittel aus der Axialbohrung (14) dient, mit einer mit der Einbaupatrone (10) eine Einheit bildenden Betätigungseinrichtung, insbesondere einem Elektromagneten (13), zur Verstellung des Ventilgliedes (15), und mit einem zur Befestigung an einem Hauptgehäuse (9) mittels einer Schraube dienenden Befestigungsauge (27), dessen winkelgerechte Ausrichtung zu der Radialbohrung (22) in der Einbaupatrone (10) nicht zerstörungsfrei lösbar ist,
**dadurch gekennzeichnet, daß** das Befestigungsauge (27) und ein an der Betätigungseinrichtung (13) vorgesehener Stecker (31) eine vorgegebene Relativlage zueinander einnehmen, und daß das Magnetgehäuse (24) und die Einbaupatrone (10) getrennte Bauteile sind, die unverdrehbar miteinander verbunden sind.

2. Hydraulisches Einbauventil nach Anspruch 1, **dadurch gekennzeichnet, daß** das Befestigungsauge (27) durch einen abstehenden Blechabschnitt gebildet ist.

3. Hydraulisches Einbauventil nach Anspruch 1 oder 2, **dadurch gekennzeichnet, daß** das Befestigungsauge (27) einstückig mit einem Bauteil (24) des Elektromagneten (13) ausgebildet ist.

4. Hydraulisches Einbauventil nach Anspruch 3, **dadurch gekennzeichnet, daß** das Befestigungsauge (27) einstückig mit dem Magnetgehäuse (24) ausgebildet ist.

5. Hydraulisches Einbauventil nach Anspruch 4, **dadurch gekennzeichnet, daß** das Magnetgehäuse (24) als Tiefziehteil gefertigt ist.

6. Hydraulisches Einbauventil nach Anspruch 4 oder 5, **dadurch gekennzeichnet, daß** das Magnetgehäuse (24) in einem der Einbaupatrone (10) benachbarten Bereich mit einem Polkern (12) des Elektromagneten (13) durch eine in eine Ringnut (25) des Polkerns (12) eingedrückte Sicke (26) verbunden ist und daß die Sicke (26) einen größeren Abstand von der der Einbaupatrone (10) zugewandten Stirnseite (37) des Magnetgehäuses (24) hat als das Befestigungsauge (27).

7. Hydraulisches Einbauventil nach einem der Ansprüche 3 bis 6, **dadurch gekennzeichnet, daß** die Einbaupatrone (10) und ein patronenseitiger Polkern (12) des Elektromagneten (13) als getrennte Teile miteinander verbördelt sind.

8. Hydraulisches Einbauventil nach einem vorhergehenden Anspruch, **dadurch gekennzeichnet, daß** eine Außenschulter (30) zur Anlage am Hauptgehäuse (9) vorhanden ist und daß die in dieselbe Richtung wie die Außenschulter (30) weisende Anlagefläche des Befestigungsauges (27) in dessen entspanntem Zustand gegenüber der Außenschulter (30) geringfügig zurückgesetzt ist.

## Claims

1. A built-in hydraulic valve, in particular for an hydraulic camshaft adjustment on a motor-vehicle engine, with a built-in cartridge (10) which has an axial bore (14), in which a valve member (15) is movable axially, and at least one radial bore (22), which starts from the external periphery of the built-in cartridge (10) and which is used for the inflow or the outflow of pressure medium into or out of the axial bore (14), with an actuating device, in particular an electromagnet (13), forming a unit with the built-in cartridge (10), in order to adjust the valve member (15), and with a fastening lug (27) which is used for fastening to a main housing (9) by means of a bolt and of which the orientation at a suitable angle with respect to the radial bore (22) in the built-in cartridge (10) is not releasable in a nondestructive manner, **characterized in that** the fastening lug (27) and a plug (31) provided on the actuating device (13) occupy a pre-set relative position, and the magnet housing (24) and the built-in cartridge (10) are separate components which are connected to each other in a rotationally fixed manner.

2. A built-in hydraulic valve according to Claim 1, **characterized in that** the fastening lug (27) is formed by a projecting portion of sheet metal.

3. A built-in hydraulic valve according to Claim 1 or 2, **characterized in that** the fastening lug (27) is constructed in one piece with a component (24) of the electromagnet (13).

4. A built-in hydraulic valve according to Claim 3, **characterized in that** the fastening lug (27) is constructed in one piece with the magnet housing (24).

5. A built-in hydraulic valve according to Claim 4, **characterized in that** the magnet housing (24) is produced in the form of a deep-drawn part.

6. A built-in hydraulic valve according to Claim 4 or 5, **characterized in that** in a region adjacent to the built-in cartridge (10) the magnet housing (24) is connected to a pole core (12) of the electromagnet (13) by a bead (26) pressed into an annular groove (25) in the pole core (12), and the bead (26) is at a greater distance from the front end (37) of the magnet housing (24) facing the built-in cartridge (10) than the fastening lug (27).

7. A built-in hydraulic valve according to one of Claims 3 to 6, **characterized in that** the built-in cartridge (10) and a pole core (12) of the electromagnet (13) on the cartridge are connected to each other as separate parts by flanging.

8. A built-in hydraulic valve according to a preceding Claim, **characterized in that** an outer shoulder (30) is present for abutment against the main housing (9), and the abutment face of the fastening lug (27) facing in the same direction as the outer shoulder (30) is slightly offset with respect to the outer shoulder (30) in its non-stressed state.

## Revendications

1. Valve hydraulique incorporée, en particulier pour le réglage hydraulique de l'arbre à cames dans un moteur de véhicule automobile, comportant une cartouche incorporée (10) qui présente un perçage axial (14) dans lequel est mobile axialement un organe de valve (15), et au moins un perçage radial (22) qui part de la périphérie extérieure de la cartouche incorporée (10) et qui sert à l'entrée ou à la sortie de fluide sous pression dans ou hors du perçage axial (14), comportant un dispositif d'actionnement formant une unité avec la cartouche incorporée (10), en particulier un électro-aimant (13) pour déplacer l'organe de valve (15), et comportant un oeillet de fixation (27) qui sert à la fixation sur un boîtier principal (9) au moyen d'une vis et dont l'orientation angulaire correcte par rapport au perçage radial (22) dans la cartouche incorporée (10) ne peut pas être défaite sans destruction, **caractérisée en ce que** l'oeillet de fixation (27) et un connecteur mâle (31) prévu sur le dispositif d'actionnement (13) occupent une position relative prédéterminée l'un par rapport à l'autre, et **en ce que** le boîtier magnétique (24) et la cartouche incorporée (10) sont des composants séparés qui sont reliés l'un à l'autre solidairement en rotation.

2. Valve hydraulique incorporée selon la revendication 1, **caractérisée en ce que** l'oeillet de fixation (27) est formé par un tronçon de tôle faisant saillie.

3. Valve hydraulique incorporée selon l'une ou l'autre des revendications 1 et 2, **caractérisée en ce que** l'oeillet de fixation (27) est réalisé d'un seul tenant avec un composant (24) de l'électro-aimant (13).

4. Valve hydraulique incorporée selon la revendication 3, **caractérisée en ce que** l'oeillet de fixation (27) est réalisé d'un seul tenant avec le boîtier magnétique (24).

5. Valve hydraulique incorporée selon la revendication 4, **caractérisée en ce que** le boîtier magnétique (24) est réalisé sous forme de pièce emboutie.

6. Valve hydraulique incorporée selon l'une ou l'autre des revendications 4 et 5, **caractérisée en ce que** dans une zone voisine de la cartouche incorporée (10), le boîtier magnétique (24) est relié à un noyau polaire (12) de l'électro-aimant (13) par une moulure (26) enfoncée dans une gorge annulaire (25) du noyau polaire (12), et **en ce que** la moulure (26) présente, par rapport au côté frontal (37) du boîtier magnétique (24) tourné vers la cartouche incorporée (10), une distance plus grande que celle de l'oeillet de fixation (27).

7. Valve hydraulique incorporée selon l'une des revendications 3 à 6, **caractérisée en ce que** la cartouche incorporée (10) et un noyau polaire (12) côté cartouche de l'électro-aimant (13) sont reliés l'un à l'autre par sertissage en tant que pièces séparées.

8. Valve hydraulique incorporée selon l'une des revendications précédentes, **caractérisée en ce qu'**il est prévu un épaulement extérieur (30) pour venir en appui contre le boîtier principal (9), et **en ce que** la surface d'appui de l'oeillet de fixation (27), dirigée dans la même direction que l'épaulement extérieur (30), est légèrement décalée en retrait par rapport à l'épaulement extérieur (30) dans l'état détendu dudit oeillet.
